# EUROPÄISCHE PATENTSCHRIFT

(11) **EP 0 891 887 B1**
(45) Veröffentlichungstag und Bekanntmachung des Hinweises auf die Patenterteilung: **22.10.2003**
(21) Anmeldenummer: 98113127.9
(22) Anmeldetag: 15.07.1998
(51) Int. Cl.: B60K 35/00, G02B 27/01, G02B 5/32

(54) **Verwendung eines holographischen Bildschirmes als Darstellungsfläche in einem Fahrzeug**
Use of a holographic screen as a display in a vehicle
Utilisation d'un écran holographique comme dispositif d'affichage de véhicule

(30) Priorität: 17.07.1997 DE 19730563
(43) Veröffentlichungstag der Anmeldung: 20.01.1999
(73) Patentinhaber: DaimlerChrysler AG, 70567 Stuttgart (DE); Eberl, Heinrich A., 87463 Probstried (DE)
(72) Erfinder: Abersfelder, Günter, Dr., 71065 Sindelfingen (DE); Grantz, Helmut, 71067 Sindelfingen (DE); Halldorsson, Thorsteinn, 81276 München (DE); Schmidt-Bischoffshausen, Horst, Dr., 85579 Neubiberg (DE); Uhl, Stefan, Dr., 70597 Stuttgart (DE); Eberl, Heinrich Alexander, 87463 Probstried (DE)

(56) Entgegenhaltungen:
- EP-A- 0 445 824
- US-A- 4 372 639
- US-A- 4 967 191
- US-A- 5 278 532

## Beschreibung

Die vorliegende Erfindung betrifft ein Verfahren und eine Vorrichtung zur holographischen Darstellung von Bilder in einem Fahrzeug.

Zur Kategorie der Fahrzeuge gehören beispielsweise Kraftfahrzeuge, Bahn, Sonderfahrzeuge, Flugzeuge und Schiffe. Als Anzeigegeräte und Anzeigebildschirme (Displays) sind zur Verwendung in Kraftfahrzeugen bisher verschiedene Ausführungsformen bekannt. Beispielsweise ist es bekannt, mechanische Zeigerinstrumente vorzusehen, die als Kombiinstrument ausgebildet sein können und verschiedene Informationen wie beispielsweise Fahrzeuggeschwindigkeit, zurückgelegte Strecke, Uhrzeit, Motordrehzahl und gegebenenfalls weitere Größen zur Anzeige bringen. Weiterhin ist es bekannt, Displays als LCD-Bildschirme auszubilden. Es ist auch vorgeschlagen worden, eine holographische Darstellung im Windschutzscheibenbereich vorzusehen. Bei dieser letztgenannten Lösung liegt ein Vorteil darin, daß die virtuelle Bilddarstellung auf eine solche Entfernung appliziert werden kann, daß keine Akkomodation des Blickes des Fahrers auf die Entfernung der Anzeige zu der Entfernung aufgrund der Beobachtung der Verkehrssituation erforderlich ist.

Aus den beiden nicht vorveröffentlichen Patentanmeldungen beim Deutschen Patentamt mit den Anmeldenummern 197 00 162.9 und 197 03 592.2 ist es bekannt, einen holographischen Bildschirm für eine Laseraufprojektion und eine Laserrückprojektion vorzusehen. Dieser Bildschirm ist bei normalem Umgebungslicht schwarz. Für bestimmte Wellenlängen des Lichtes kann dieser Bildschirm jedoch so ausgebildet sein, daß dieses Licht in einen bestimmten Raumwinkel durchgelassen bzw. zurückgelassen wird. Nach den Ausführungen in den beiden Patentanmeldungen muß dieser Bildschirm nicht eben ausgebildet sein. Es ist vielmehr möglich, diesen Bildschirm mit einer nahezu beliebigen Oberflächenkontur auszubilden. Betreffend der Offenbarung des Bildschirmes wird auf diese beiden Anmeldungen Bezug genommen.

In der US 4,967,191 wird eine Anzeigevorrichtung für ein Kraftfahrzeug beschrieben, das eine Pojektionseinheit aufweist, die am Fahrzeughimmel angeordnet ist. Diese Projektionseinheit projeziert Bilder auf einen zugehörigen Reflexionsschirm, der die Bilder in Richtung des Fahrers umlenkt. Das so dargestellte Bild erscheint dem Fahrer als virtuelles Bild, das ausserhalb der vorderen Windschutzscheibe gelagert zu sein scheint, wenn er durch die Windschutzscheibe nach drauassen blickt. Der Reflektor kann ein Spiegel oder eine Hologrammplatte sein. Mit einer Hologrammplatte ist es möglich trotz kleinem Projektor ein deutliches Bild zu erhalten und die Erkennbarkeit selbst bei einfallendem Sonnenlicht zu verbessern. Hierbei handelt es sich um ein konventionelles Head-up-Display. Die Hologrammplatte dient nur zur Verhinderung von unnötiger Reflektion des einstrahlenden Sonnenlichts, um damit ein deutliches Bild zu erhalten.

Die DE 37 35 983 A1 offenbart eine holographische Mehrfachanzeigevorrichtung für ein Kraftfahrzeug. Sie umfasst eine mehrschichtige Hologrammplatte mit vor dem Instrumentenbrett angeordneten Bildern unterschiedlicher Farbe zur Wiedergabe mehrerer holographischer Bilder zur Anzeige von mehreren spezifischen Anzeigen. Mehrere Lichtquellen sind vor den Hologrammplatten angeordnet, um wahlweise auf der mehrschichtigen Hologrammplatte in unterschiedlichen Farben aufgezeichnete holographische Bilder wiederzugeben. Die Hologrammplatte ist dabei vor dem mechanischen Instrumentenbrett angeordnet, das beispielsweise einen Tachometer, ein Kühlmitteltemperaturmessgerät, ein Treibstoffmessgerät und eine Kilometeranzeige umfasst. Auf der Hologrammplatte sind mehrere holographische Bilder aufgezeichnet, wie beispielsweise ein Scheinwerferlicht, eine Lenkrichtung, eine Warnung für Batterie, Waschwasser, Treibstoff. Diese in der Hologrammplatte aufgezeichneten holographischen Bilder werden wahlweise mittels Licht widergegeben, das von mehreren Lichtquellen ausgesendet wird, die so angeordnet sind, dass sie auf jedes der holographischen Bilder strahlen. Zur Anzeige eines dieser Bilder wird die zugehörige Lichtquelle erleuchtet. Dabei können die Bilder dieser Hologrammschichten frei an irgendeiner erforderlichen Stelle vor oder hinter der Oberfläche der Hologrammplatte wiedergegeben werden. Folglich wird nicht das Licht mit der Bildinformation moduliert, sondern die holographischen Bilder sind bereits in der Hologrammplatte aufgenommen.

Erfindungsgemäß wird gemäß Anspruch 1 ein Verfahren zur holographischen Darstellung von Bildern beansprucht.

Dabei erweist es sich als besonders vorteilhaft, daß gegenüber herkömmlichen holographischen Darstellungen der Kontrast wesentlich verbessert wird, weil durch den

Bildschirm das Umgebungslicht absorbiert wird. Bei einer Darstellung von fahrzeug- bzw. fahrsituationsspezifischen Größen wie beispielsweise einer holographischen Darstellung des Tachometers wird also die Erkennbarkeit für den Fahrzeugführer wesentlich verbessert. Weiterhin verringert sich der Platzbedarf gegenüber herkömmlichen Anzeigeeinheiten erheblich. Gegenüber anderen Anzeigeeinheiten reduziert sich der Strombedarf, da die Bildschirmhelligkeit wegen der höheren Kontrastleistung durch den schwarzen Hintergrund reduziert werden kann. Bei Verwendung von Laserstrahlen zur Bilderzeugung ist eine weitere erhebliche Reduzierung des Strombedarfs möglich, weil im Gegensatz zur konventionellen Lichterzeugung kein Infrarotlicht, also keine damit verbundene Wärmestrahlung erzeugt wird. Der Leistungsbedarf liegt typischerweise bei 1,25 (LCD-Projektion) bis 10 % (CRT-Projektion) im Vergleich zu konventionellen Systemen. Dies bringt beispielsweise hinsichtlich der Ladebilanz der Batterie Vorteile mit sich. Der Betrachtungswinkel ist nahezu beliebig vorgebbar. Der Bildschirm ist in seiner Oberflächengestaltung flexibel. Dadurch können Kanten vermieden werden, was sich hinsichtlich der passiven Sicherheit bei einem Crash vorteilhaft auswirkt. Außerdem ist die Fläche des Bildschirmes hinsichtlich ihrer Ausdehnung und Form flexibel. Eine Abstrahlung der Bildschirminformation des holographischen Bildschirmes erfolgt in einem bei der Herstellung des Hologramms eines Bildschirmes vorgegebenen und einstellbaren Winkelbereich vorzugsweise zum Betrachter hin. Dadurch werden vorteilhafterweise unerwünschte Spiegelungen beispielsweise in der Windschutzscheibe verhindert. Da Fremdlicht beispielsweise durch die Windschutzscheibe sinnvollerweise aus einer anderen Richtung auf die Fläche strahlt als das Projektionssystem und auch die Lichtfarbe von der Lichtfarbe des Projektionssystems abweicht, stört es nicht die eigentliche Bildinformation. Aus diesem Grunde sind keine besonderen Abschattungen wie beispielsweise Hutzen erforderlich, wodurch Kosten und Platz gespart werden und mehr gestalterische Freiheiten bestehen.

Vorteilhafterweise ist der Bildschirm schwarz oder vorzugsweise dunkelfarbig, um einen guten Kontrast zu erreichen. Je nach gestalterischer Anforderung kann der Bildschirm auch grau oder in einer anderen Farbe ausgebildet sein.

Der Bildschirm kann in Auflicht-oder in Durchlichtprojektion funktionieren.

Durch diese beiden Ausführungsarten ist es vorteilhaft möglich, das Projektionssystem entsprechend dem zur Verfügung stehenden Einbauraum in dem Kraftfahrzeug anzubringen. So kann beispielsweise das Projektionssystem auf der Fahrerseite als Durchlichtprojektion ausgebildet sein, weil gegenüber den herkömmlichen Tachometern hinter dem Armaturenbrett Einbauraum gespart wird. Auf der Beifahrerseite bietet es sich unter Umständen an, das Projektionssystem in Auflichtprojektion auszubilden, weil durch den Airbag und das Handschuhfach der zur Verfügung stehende Raum hinter dem Armaturenbrett begrenzt ist.

Die Bildschirm oberfläch kann wach ausgeführt sein.
Dadurch kann der passiven Sicherheit im Fahrzeug Rechnung getragen werden, wenn eventuelle Flächen, auf die ein Fahrzeuginsasse bei einem Unfall aufschlagen kann, entsprechend weich ausgeführt sind.

Der Bildschirm kann im Sichtbereich des Fahrers unterhalb der Windschutzscheibe angeordnet sein.

Vorteilhaft kann ein solcher Bildschirm anstelle eines bisher verwendeten Armatureneinsatzes hinter dem Lenkrad verwendet werden. Mittels eines Projektionssystems können dem Fahrzeugführer die entsprechenden Informationen angezeigt werden.

Der Bildschirm kann im Sichtbereich des Beifahrers unterhalb der Windschutzscheibe angeordnet sein.

Durch eine solche Positionierung kann der Bildschirm einfach dem Beifahrer zugeordnet werden.

Der Bildschirm kann zumindest im wesentlichen auf der Abdeckung eines Airbags angebracht sein.

Dabei erweist es sich als vorteilhaft, daß die Abdeckung des Airbags ohnehin nicht als Ablage für irgendwelche Gegenstände dienen kann, weil diese im Falle einer Auslösung des Airbags stören könnten. Da also die Abdeckung des Airbags immer frei von Gegenständen ist, ist deswegen auch eine ungestörte Bilddarstellung möglich.

Der Bildschirm kann auch zumindest im wesentlichen auf dem Deckel des Handschuhfaches angebracht sein.

Da der Deckel des Handschuhfaches ebenfalls durchweg nicht als Ablagefläche nutzbar ist und ebenfalls im Bereich des Beifahrers angeordnet ist, eignet sich dieser Deckel ebenfalls als Oberfläche des Bildschirmes.

Der Bildschirm Kann weiterhin zumindest in einer der beiden Seitenflächen des Mitteldomes angeordnet sein.

Dadurch wird eine gute Sichtbarkeit durch den Fahrer bzw. den Beifahrer erreicht.

Der Bildschirm kann auf der Fläche des Mitteldomes angeordnet sein.

Dadurch ist der Bildschirm bei einem entsprechenden Raumwinkel von allen Fahrzeuginsassen einsehbar.

Der Bildschirm kann zu dem auf einer leicht angewinkelten Fläche des Dachhimmels im mittleren bis vorderen Bereich des Fahrzeuges angeordnet sein.

Der Bildschirm kann beispielsweise von wenigstens einem Projektionssystem angestrahlt werden, das im hinteren Bereich des Fahrzeuges angeordnet ist. Die Bildschirme sind dann durch entsprechend eingestellte Raumwinkel von den Fondsinsassen des Fahrzeuges gut einsehbar.

Es kann sich hinter der leicht angewinkelten Fläche eine Beleuchtungseinrichtung befinden.

Dadurch wird der entstehende Raum genutzt. Die Strahlrichtung der Beleuchtungseinrichtung kann vorteilhaft in den Kniebereich der Fondsinsassen gerichtet sein und gegebenenfalls verdrehbar sein.

Der Bildschirm kann eben falls hinter und/oder auf der Innenseite einer Sonnenblende angebracht sein.

Dadurch kann der Raum optimal genutzt werden.

Der Bildschirm kann auf der hinteren Fläche der Kopfstützen der Vordersitze angebracht sein.

Dadurch können die Fondsinsassen den Bildschirm ohne Verdrehung des Kopfes sehen. Die nutzbare Bildschirmfläche kann dabei dem Außenmaß der Kopfstütze entsprechen und in ihrer Außenform der Kopfstütze angepaßt sein.

Der Bildschirm kann weiterhin größer als die Projektionsfläche auf den Bildschirm sein.

Dadurch ist keine Nachjustierung des Projektionssystemes auf den Bildschirm bei einer Verstellung des Vordersitzes notwendig.

Eine Änderung der Richtung des Projektionssystemes kann mit einer Verstellung des Vordersitzes und/oder der Kopfstütze des Vordersitzes erfolgen.

Dadurch wird vorteilhaft die Projektionsrichtung bei einer Verstellung der Vordersitze angepaßt.

Der Bildschirm kann als Teil eines Anzeigesystems eines Kraftfahrzeuges verwendet, worden wobei das Anzeigesystem außer dem Bildschim (3) wenigstens zwei Projektionssysteme aufweist, wobei die Abbildungen der beiden Projektionssysteme aus demselben Betrachtungswinkel zu sehen sind.

Dadurch können beispielsweise sich überschneidende Abbildungen dargestellt werden. Es ist also möglich, einen Tachometer darzustellen, indem eine erste Abbildung die Skalierung des Tachometers darstellt. Eine weitere Abbildung kann die Zeigerstellung entsprechend der momentanen Geschwindigkeit darstellen. Durch eine Überlagerung dieser beiden Abbildungen ist also ein Tachometer darstellbar.

Die Projektionssysteme können unterschiedliche Farben aufweisen.

Dadurch ist beispielsweise die Zeigerstellung entsprechend besser erkennbar.

Der Bildschirm kann als Teil eines Anzeigesystems eines Kraftfahrzeuges verwendet werden, wobei das Anzeigesystem außer dem Bildschim (3) wenigstens zwei Projektionssysteme aufweist, wobei die Abbildungen der beiden Projektionssysteme aus unterschiedlichen Betrachtungswinkeln zu sehen sind.

Dadurch können mittels eines Bildschirmes unterschiedliche Abbildungen für mehrere Fahrzeuginsassen dargestellt werden. Beispielsweise können dem Fahrzeugführer fahrzeug, fahrbedingungs- und fahrsituationsspezifische Daten angezeigt werden, während den anderen Fahrzeuginsassen andere Informationen wie beispielsweise ein Video oder touristische Informationen über die gerade durchfahrene Gegend angezeigt werden können.

Zu dem wenigstens einen Bildschirm können wenigstens zwei Projektionssysteme vorhanden sein, deren Abbildungen aus unterschiedlichen Betrachtungswinkeln zu sehen sind.

Die Bildschirme entsprechend den angegebenen Verwendungen können so angeordnet werden, daß durch das Bildschirmprinzip unerwünschte Spiegelungen vermieden werden und Fremdlichteinflüsse sich nicht kontrastmindernd auswirken.

Ein Ausführungsbeispiel der Erfindung ist in der Zeichnung dargestellt. Es zeigt dabei im einzelnen:
- Fig. 1 bis 9:: verschiedene Anbringungsmöglichkeiten eines Bildschirmes in einem Kraftfahrzeug und
- Fig. 10 und 11:: Ausführungsbeispiele von Projektionssystemen.

Nach dem Einschalten zumindest eines Projektionssystemes wird der Bildschirm entweder scannend über Laser oder flächig über eine geeignete Lichtquelle, wie beispielsweise eine Halogenlampe, angestrahlt. Dabei wird der Laser entsprechend der gewünschten oder erforderlichen Bildinformation moduliert oder der flächigen Projektion über Lichtventile wie beispielsweise Dias, oder einen transparenten, kleinen LCD-Schirm der Bildinhalt überlagert. Für eine vollfarbige Darstellung können drei Farben (RGB) verwendet werden (rot, grün und blau).

Trifft der modulierte Projektionsstrahl auf den Bildschirm als schwarze Projektionsfläche, entsteht aus dem Blickwinkel des Betrachters ein helles, kontrastreiches Bild in einem Betrachtungsabstand, der mit der Ebene der Projektionsfläche nicht identisch sein muß. Dieser Betrachtungsabstand kann also auch in größerer Entfernung vom Auge dargestellt sein, wodurch die Akkomodation des Auges erleichtert wird. Außerdem ist es möglich, eine dreidimensionale Darstellung zu realisieren.

Dabei sind die virtuelle Bilddarstellung, der Projektionswinkel und der in weiten Bereichen variable Betrachtungswinkel bei der Herstellung des holographischen Bildschirmes in weiten Bereichen einstellbar. Das Anzeigesystem ist als Auflichtprojektion oder als Durchlichtprojektion realisierbar. Die Durchlichtprojektion erfordert einen dunklen Kasten als Lichtfalle, um ein Rückstreuen von auftreffendem Fremdlicht zu verhindern.

Die Projektionsrichtung ist nicht identisch mit der Betrachtungsrichtung sondern in einem Winkel dazu angeordnet. Der Projektionswinkel auf die Bildschirmoberfläche ist frei wählbar und muß nicht 90° betragen. Genauso muß der Betrachtungswinkel auf die Bildschirmfläche nicht rechtwinklig sein.

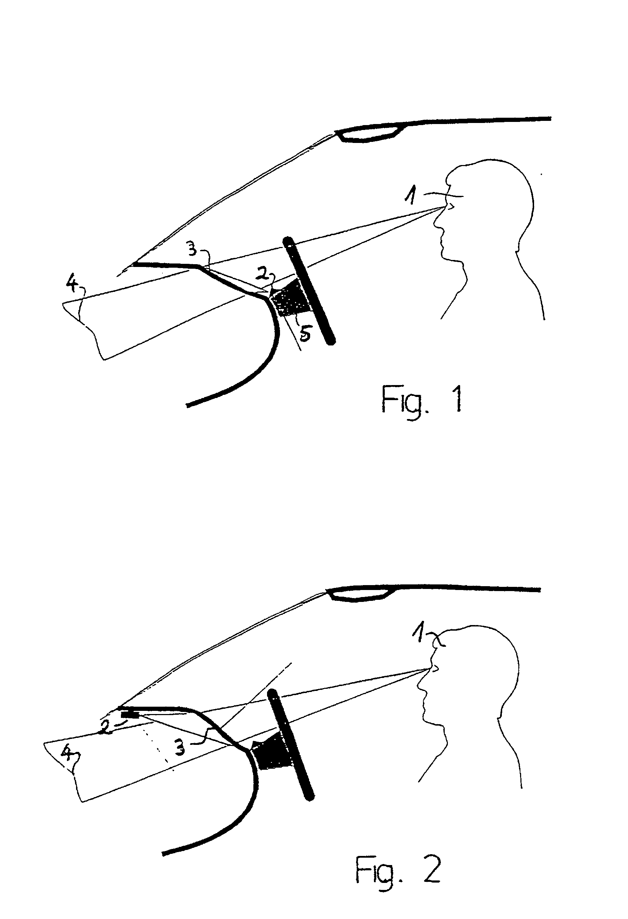

Figur 1 zeigt ein Anzeigesystem, bestehend aus einem Bildschirm 3 und einer Projektionssystem 2. Die Bildschirmoberfläche ist in dem gezeigten Ausführungsbeispiel der Bereich, indem sich heute gängigerweise das Kombiinstrument befindet, das unter anderem den Tachometer beinhaltet Vorteilhaft ist an dieser Stelle keine mechanische oder elektrische Anzeige mehr nötig. Die Oberfläche kann also die weich gepolsterte und nach Designvorstellungen gestaltete Oberfläche der Instrumententafel sein. Sie ist nur mit dem flexiblen holographischen Material beschichtet. Der Bildschirm wird von einem kleinen Projektionssystem 2 angestrahlt, das sich auf der Oberfläche des Mantelrohres 5 befindet. Der Fahrzeugführer 1 sieht das virtuelle Bild 4 in einem Abstand, der keine Akkomodation der Augen auf die Anzeige erfordert.

Figur 1 zeigt die Anordnung als Auflichtprojektion. Es ist jedoch auch möglich, die Anordnung als Durchlichtprojektion auszubilden, wie im Ausführungsbeispiel der Figur 2 dargestellt. Der Bildschirm 3 ist hier als transparenter Bildschirm ausgebildet. Das Projektionssystem 2 befindet sich in einem abgeschlossenen dunklen Kasten.

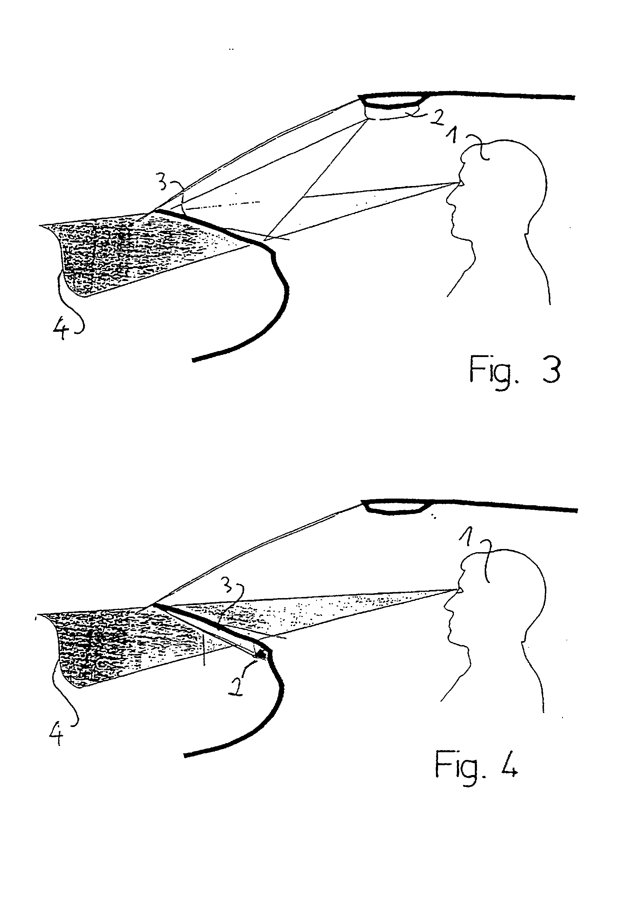

Figur 3 zeigt ein Anzeigesystem für einen Beifahrer. In dem gezeigten Ausführungsbeispiel ist der Bildschirm auf die Abdeckung des Airbags aufgebracht. Das Projektionssystem ist im Bereich des Daches des Fahrzeuges angebracht Der Beifahrer 1 sieht in dem gezeigten Ausführungsbeispiel das virtuelle Bild 4.

Figur 4 zeigt eine ähnliche Anordnung beispielsweise in der Mitte der Instrumententafel in Durchlichtprojektion. Der Bildschirm 3 ist hier wieder als transparenter Bildschirm ausgebildet.

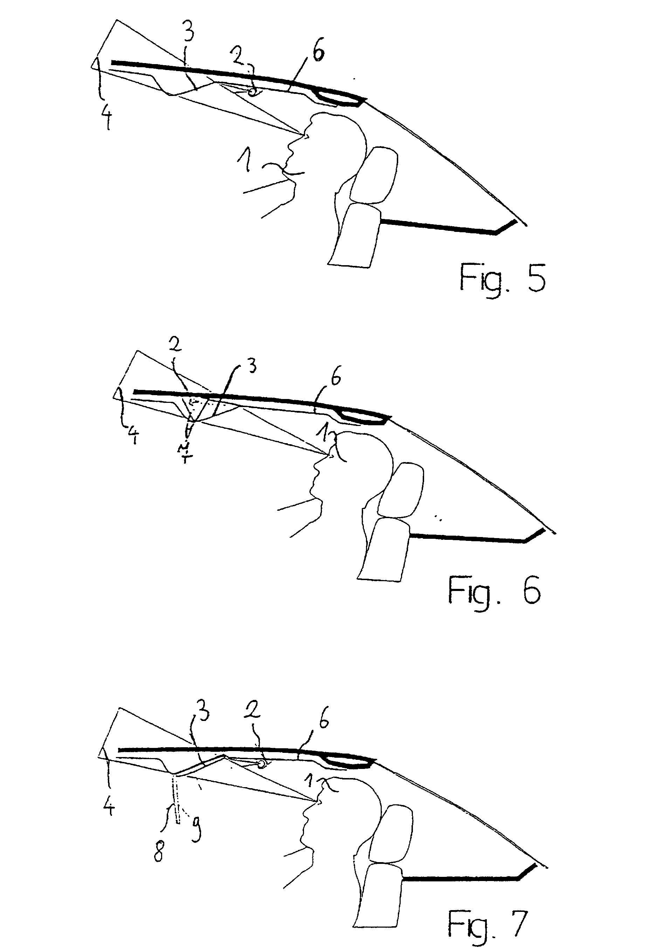

Figur 5 zeigt ein Anzeigesystem für einen Fondsinsassen 1. Der Bildschirm 3 ist an einer entsprechenden Abschrägung des Dachhimmels 6 angebracht Das Projektionssystem 2 ist ebenfalls am Dachhimmel seitlich angebracht. Der Fondsinsasse 1 sieht hier das virtuelle Bild 4.

Während Figur 5 ein System in Auflichtprojektion zeigt, zeigt Figur 6 ein System in Durchlichtprojektion. Der Bildschirm 3 ist hier wieder als transparenter Bildschirm ausgebildet. Das Projektionssystem 2 ist in Betrachtungsrichtung hinter dem Bildschirm 3 angeordnet. Die Seitenwände 7 sind vorteilhaft aus einem lichtabsorbierenden Material, um den Kontrast des Bildes zu erhöhen.

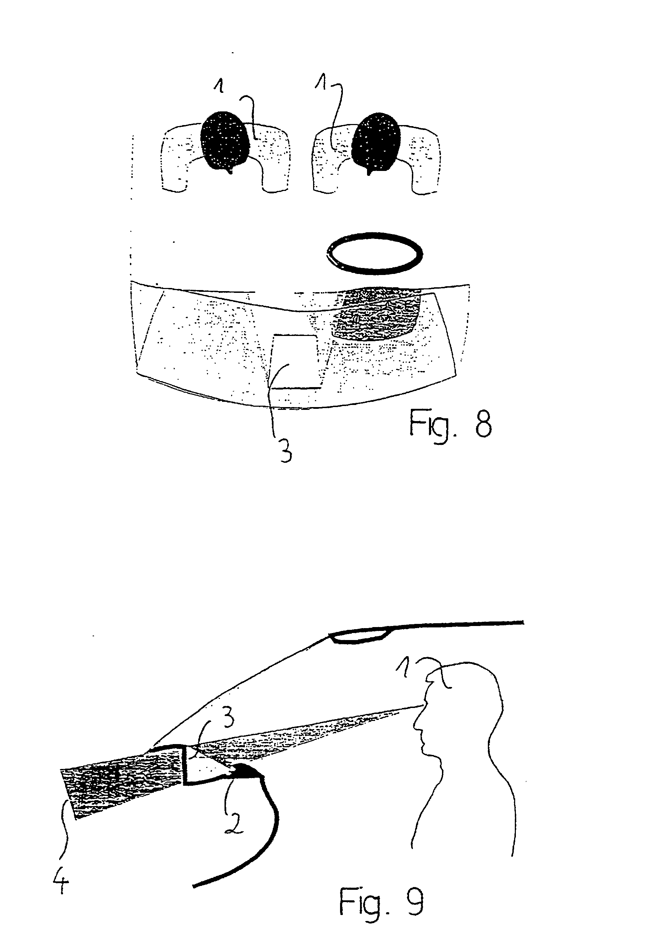

Figur 7 zeigt eine Anordnung des Bildschirmes, bei der dieser auch hinter bzw. auf der Innenseite 9 einer Sonnenblende 8 angebracht sein kann. Im übrigen handelt es sich um dieselbe Anordnung wie bei Figur 5, weswegen sich eine weitere Erörterung erübrigt. Selbstverständlich ist eine solche Anbringungsmöglichkeit auch auf der Beifahrerseite des Fahrzeuges gegeben.

Figur 8 zeigt einen Bildschirm ähnlich der Figur 4, der im vorderen Bereich des Fahrzeuges in der Mitte angeordnet ist und auf dem für den Fahrzeugführer und den Beifahrer unterschiedliche Informationen angezeigt werden. Die beiden entsprechenden Raumwinkel als Betrachtungswinkel sind dabei unterschiedlichen Projektionssystemen zugeordnet, die in der Darstellung der Figur 8 nicht eingezeichnet sind.

Figur 9 zeigt einen Bildschirm, der in seiner Neigung der Blickrichtung des Beifahrers besser angepaßt ist. Das in Figur 9 gezeigte System betrifft das Verfahren der Auflichtprojektion durch das Projektionssystem 2, das sich für den Beifahrer hinter der Abdeckung verbirgt.

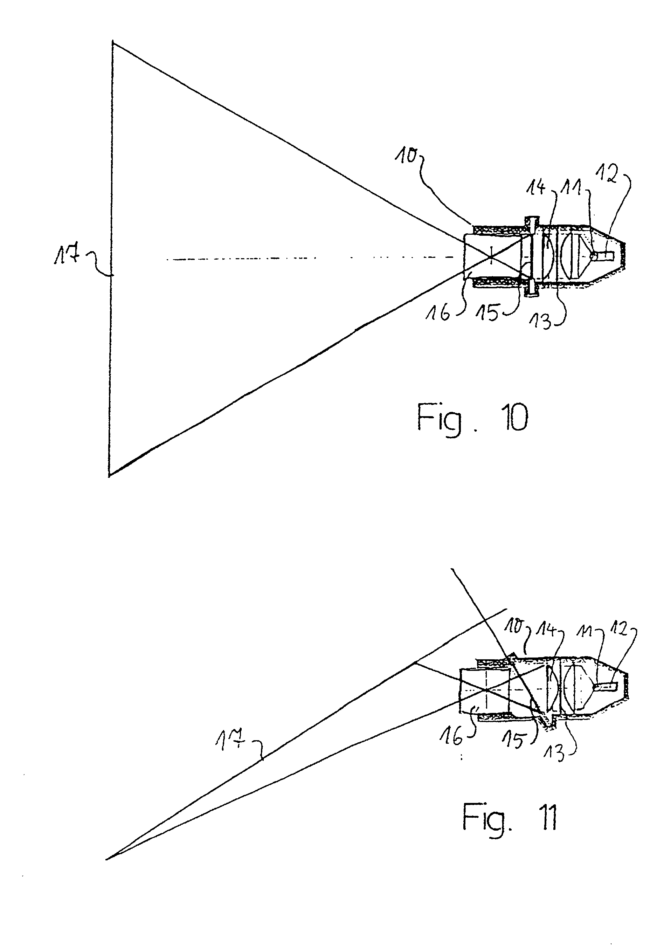

Figur 10 zeigt ein erstes Ausführungsbeispiel eines Projektionssystems 10. In dem Projektionssystem 10 befindet sich eine Glühbirne 11 und ein Ellipsoidreflektor 12. Das Licht wird über einen Wärmeschutzfilter 13 und einen Kondensor 14 auf ein Display 15 gegeben. Weiterhin ist ein Objektiv 16 vorhanden. Mit 17 ist die Projektionsfläche bezeichnet. Es handelt sich hierbei um ein Projektionssystem für ein holographisches Display mit Weißlicht und kleinem LCD-Display im Strahlengang.

Figur 11 zeigt ein Schrägprojektionssystem nach Scheimpflug als Ausführungsbeispiel eines Projektionssystemes. Gleiche Bauteile zur Figur 10 sind mit dengleichen Bezugszeichen versehen.

Die Abmessungen beider Projektionssysteme betragen nur einige cm. Die Bildschirme entsprechend den Figuren 1 bis 4 und 8 können so angeordnet werden, daß durch das Bildschirmprinzip unerwünschte Spiegelungen vermieden werden und Fremdlichteinflüssen sich nicht kontrastmindernd auswirken.

Es sind im übrigen noch weitere Anbringungsmöglichkeiten für den Bildschirm wie auch für das Projektionssystem denkbar, die im einzelnen in den Figuren nicht dargestellt sind und hier nur beschrieben werden sollen.

Beispielsweise kann die Bildschirmoberfläche auf den Seitenflächen des Mitteldomes angebracht sein. Das dazugehörige Projektionssystem kann sich beispielsweise seitlich am Mantelrohr befinden oder unterhalb der Instrumententafel. Dies kann nicht nur auf der Fahrerseite sein sondern auch auf der Beifahrerseite, wobei das Projektionssystem 2 hier auf der Unterseite der Instrumententafel anzubringen wäre. Es ist dann beispielsweise die Wiedergabe von Fernsehen oder Video für den Beifahrer möglich, ohne daß der Fahrzeugführer dadurch gestört würde.

Weiterhin kann die Bildschirmoberfläche auf der Oberfläche des Mitteldomes angebracht sein. Das Projektionssystem kann aus dem ebenen Bereich heraus vor dem Schalthebel mit der Projektionsrichtung nach oben angeordnet sein. Wenn eine Abschattung oder Verschmutzung vermieden werden soll, kann beispielsweise auch eine Durchlichtprojektion erfolgen, indem die Bildschirmoberfläche von der Innenseite des Mitteldomes angestrahlt wird.

Grundsätzlich ist der Betrachtungswinkel bei den Bildschirmen frei einstellbar.

Eine weitere Gestaltungsmöglichkeit besteht beispielsweise darin, daß bei Durchlichtprojektion die Bildschirmoberfläche Bestandteil des Projektionssystems sein kann.

Der Bildschirm ist in den genannten Ausführungsbeispielen das Hologramm einer vorzugsweise weißen Projektionsfläche, das entweder auf eine lichtschluckende mattschwarze oder auch farbige oder graue Unterlage aufgezogen wird oder für Durchlichtprojektion vor einem lichtschluckenden mattschwarzen Kasten auf eine transparente Oberfläche aufgezogen wird. Im letzteren Fall befindet sich die Austrittsöffnung der Projektionseinheit innerhalb dieses Kastens.

Die Betrachtungsebene des virtuellen Bildes, der Projektionswinkel und der Betrachtungswinkel sowie die Öffnung dieser beiden Winkel sind Konstruktionsparameter, die bei der Herstellung des Hologrammes eingestellt werden können. Projektionswinkel und Betrachtungswinkel können beispielsweise einachsig sein.

Sinnvollerweise wird die Öffnung des Projektionswinkels klein gehalten. Die Öffnung des Betrachtungswinkel hängt davon ab, ob mehrere Personen die Möglichkeit zur Betrachtung haben sollen (relativ großer Öffnungswinkel) oder ob eine Ausblendung der Information zu anderen Richtungen erfolgen soll (relativ kleiner Öffnungswinkel). Zur Vermeidung unerwünschter Spiegelungen sollte der Betrachtungswinkel so eingestellt werden, daß er in der Breite zwar groß genug ist, in der Höhe jedoch stark begrenzt ist.

Die Konstruktion mit relativ kleinem Öffnungswinkel bringt den Vorteil, daß bei hellem Umgebungslicht immer der volle Kontrast des Bildschirms erzielt wird. Kontrastmindernd wirken lediglich mögliche Reflexe an der Schutzabdeckung der Bildschirmoberfläche. Aus diesem Grunde sollte diese vorteilhafterweise entspiegelt sein, vergleichbar der von Brillengläsern bekannten Technologie. Ursache sind folgende Eigenschaften des Hologrammes. Der Bildschirm erscheint in Betrachtungsrichtung immer schwarz oder in der Farbe der Unterlage solange kein schmalbandiges Licht aus der Projektionsrichtung auf diesen fällt. Breitbandiges Umgebungslicht führt nicht zu einer Rückstreuung in Betrachtungsrichtung, so daß der Bildschirm schwarz oder in der Farbe seiner Unterlage erscheint. Schmalbandiges Licht aus einer anderen als der eingestellten Projektionsrichtung führt ebenfalls zu keiner Rückstreuung, so daß der Bildschirm schwarz oder in der Farbe seiner Unterlage erscheint

Das Hologramm kann so ausgebildet werden, daß es mehrere Paarungen aus Projektionswinkeln und Betrachtungswinkeln beinhaltet. Dabei muß mindestens ein Winkel eines Paares von dem des anderen Paares oder weiterer Paare unterschiedliche sein. Weiterhin können auf dieselbe Bildschirmoberfläche mehrerer Projektionssysteme gleichzeitig aus unterschiedlichen Richtungen einstrahlen. So ist es möglich, unterschiedliche Bildinformationen in unterschiedliche Betrachtungsrichtungen gleichzeitig zu übertragen. Auf diese Weise werden Bildinformationen in eine Betrachtungsrichtung für die andere Betrachtungsrichtung ausgeblendet. Auf diese Weise kann beispielsweise der Fahrer Informationen des Navigationssystems einsehen, während der Beifahrer auf derselben Bildschirmfläche gleichzeitig ein Video anschaut (sinnvollerweise mit Kopfhörern), ohne daß einen gegenseitige Beeinflussung stattfindet. Auch im Fondbereich können auf diese Weise die Fondsinsassen mit unterschiedlichen Informationen versorgt werden. Weiterhin ist es möglich, auf dieselbe Bildschirmoberfläche mehrere Projektionssysteme gleichzeitig aus dergleichen angenäherten Richtung einstrahlen zu lassen. Dadurch ergibt sich in Betrachtungsrichtung eine Überlagerung von zwei unterschiedlichen Bildinformationen (beispielsweise zur Zeigerdarstellung eines Tachometers vor konstantem Hintergrund).

Zur Projektion können ein oder mehrere entsprechend der zu erzeugenden Bildinformation modulierte farbige Laserstrahlen verwendet werden. Für eine vollfarbige Darstellung werden sinnvollerweise je eine roter, ein grüner und ein blauer Laserstrahl verwendet, die auf bekannte Art über teildurchlässige Spiegel einachsig überlagert werden und über ein einziges Scannersystem auf den Bildschirm übertragen werden.

Als Projektionssystem kann aufgrund der besonderen Herstellungsmethode auch schmalbandiges weißes Licht, beispielsweise einer Halogenlampe, verwendet werden. Dieses Licht kann beispielsweise durch geeignete Lichtventile (beispielsweise eine kleiner LCD-Schirm oder eine hochaufgelöste Darstellung eines konstanten Bildes) moduliert werden. Dabei führen nur die Lichtwellenlängen des weißen Lichtes zur Rückstreuung, die den Laserwellenlängen entsprechen, mit denen das Hologramm hergestellt wurde. Trotzdem führt die Mischung der Wellenlängen und die durch das Lichtventil in der Helligkeit modulierte Helligkeit derselben zu einer vollfarbeigen Darstellung.

Beispielsweise bietet sich für das Kombiinstrument eine Projektion mit mehreren Projektionssystemen an. Einerseits ist eine Darstellung des Hintergrundes oder Zifferblattes durch Lichtprojektion (weiß oder farbig) eines hochaufgelösten Dias möglich. Dazu kann gleichzeitig eines Darstellung der Zeiger und/oder Warnanzeigen sowie Zusatzinformationen durch einen oder mehrere Laser oder Lichtprojektion erfolgen. Bei Verwendung mehrerer Projektionssysteme mit unterschiedlichen Farben ist eine räumliche Staffelung des virtuellen Bildes möglich. Eine solche räumliche Staffelung ist auch möglich, wenn mit mehreren Projektionssytemen gleicher Lichtfarbe aus unterschiedlichen Richtungen projiziert wird (bei entsprechender Ausführung des Hologrammes). Diese Möglichkeiten können auch bei anderen Bildschirmen im Fahrzeug realisisert werden wie beispielsweise auf der Beifahrerseite oder im Fondbereich.

Das Hologramm erstreckt sich bis zum Rand hin, es ist also kein Rahmen erforderlich. Auf diese Weise ist es möglich, gleiche oder von der Konstruktion her unterschiedliche Hologramme optisch nahtlos aneinander zu reihen und mit einer gemeinsamen Abdeckung zu versehen, mit neuen Designmöglichkeiten und der Option einer Panoramadarstellung der Bildinformation. Durch die Verwendung eines variablen und/oder programmierbaren Laserscanners ist es möglich, unterschiedliche Bildschirmbegrenzungen und Bildformate variabel darzustellen.

Der holographische Bildschirm ist kein System, das funktionellen Anforderungen genügen muß. Aus diesem Grunde ist ein einfacher Beschnitt zur Bildschirmbegrenzung möglich. Außerdem ist genau so gut eine randlose Ausführung möglich.

## Patentansprüche

1. Verfahren zur holographischen Darstellung von Bildern, mit den Schritten:
Projektion eines eines entsprechend der zu erzeugenden Bildinformation modulierten Lichtstrahls auf einen holographischen Bildschirm (3) bei einer oder mehreren vorbestimmten Wellenlängen und mit einem vorbestimmten Projektinswinkel; und Streuung eines Teils des entsprechend zu erzeugenden Bildinformation modulierten Lichtstrahls mittels des holographischen Bildschirms (3), um ein virtuelles Bild (4) der Bildinformationen holographisch darzustellen, das bei einem vorbestimmten Betrachtungswinkel sichtbar ist, wobei
bei der Abtastung des holographischen Bildschirms (3) mit Lichtstrahlen aus der richtigen Beleuchtungsrichtung sich das ursprüngliche Bild einer holographischen Aufnahme einer Projektionsfläche aufbaut und die zu erzeugenden Bilddaten auf der urspringlishen Projektionsfläche erscheiner.

2. Verfahren zur holographischen Darstellung von Bildern nach Anspruch 1,
**dadurch gekennzeichnet, dass**
der holographische Bildschirm eine holographische Aufnahme einer weißen Projektionsfläche ist.

3. Verfahren zur holographischen Darstellung von Bildern nach Anspruch 1 oder 2,
**dadurch gekennzeichnet, dass**
das virtuelle Bild in einer Ebene entsteht, die nicht mit der Ebene des holographischen Bildschirms übereinstimmt.

4. Verfahren zur holographischen Darstellung von Bildern nach einem der vorhergehenden Ansprüche, **dadurch gekennzeichnet, dass** der holographische Bildschirm bei Umgebungslich durchsichtig erscheint.

5. Verfahren zur holographischen Darstellung von Bildern nach einem der vorhergehenden Ansprüche, **dadurch gekennzeichnet, dass**
der vorbestimmte Betrachtungswinkel mit dem vorbestimmten Projektionswinkel gekoppelt ist, und
die Kopplung des vorbestimmten Betrachtungswinkels mit dem vorbestimmten Projektionswinkel bei der Herstellung der holographischen Aufnahme festgelegt wird.

6. Verfahren zur holographischen Darstellung von Bildern nach Anspruch 5, **dadurch gekennzeichnet, dass** die holographische Aufnahme mehrere paarweise gekoppelte Projektions- und Betrachtungswinkel umfaßt.

7. Verfahren zur holographischen Darstellung von Bildern nach Anspruch 5, mit den weiteren Schritten:
Projektion eines oder mehrerer weiterer Lichtstrahlen, die jeweilige Bildinformationen umfassen, bei einem oder mehreren jeweiligen vorbestimmten Wellenlängen auf den holographischen Bildschirm bei jeweiligen vorbestimmten Projektionswinkeln; und
Streuung der Teile der die jeweiligen Bildinformationen umfassenden Lichtstrahlen mittels des holographischen Bildschirms, um jeweilige virtuelle Bilder der jeweiligen Bildinformationen holographisch darzustellen, die bei jeweiligen vorbestimmten, jeweilig an einem der vorbestimmten Projektionswinkel gekoppelten Betrachtungswinkeln sichtbar sind.

8. Verfahren zur holographischen Darstellung von Bildern nach einem der vorhergehenden Ansprüche, **dadurch gekennzeichnet, dass** der holographische Bildschirm flexibles holographisches Material umfaßt.

9. Verfahren zur holographischen Darstellung von Bildern nach einem der Ansprüche 1 bis 8, **dadurch gekennzeichnet, dass** der holographische Bildschirm direkt an eine lichtschluckende Oberfläche angebracht wird.

10. Verfahren zur holographischen Darstellung von Bildern nach Anspruch 9, **dadurch gekennzeichnet, dass** die lichtschluckende Oberfläche das Armaturenbrett, eine Airbagabdeckung, eine Handschuhfachabdeckung, eine Fläche des Mitteldoms, eine Innenseite einer Sonnenblende oder die hintere Fläche der Kopfstütze eines Vordersitzes eines Fahrzeugs ist.

11. Verfahren zur holographischen Darstellung von Bildern nach Anspruch 9, **dadurch gekennzeichnet, dass** die lichtschluckende Oberfläche auf der hinteren Fläche der Kopfstütze eines Vordersitzes eines Fahrzeugs angeordnet ist, und eine Projektionsrichtung eines die Projektion des Lichtstrahls ausführenden Projektionssystems bei einer Verstellung des Vordersitzes und/oder der Kopfstütze derart geändert wird, daß der Lichtstrahl mit dem vorbestimmten Projektionswinkel auf den holographischen Bildschirm auftrifft.

12. Verfahren zur holographischen Darstellung von Bildern nach einem der vorhergehenden Ansprüche, **dadurch gekennzeichnet, dass** der holographische Bildschirm nicht eben ist.

13. Verfahren zur holographischen Darstellung von Bildern nach einem der vorhergehenden Ansprüche, **dadurch gekennzeichnet, dass** der Lichtstrahl in Auflichtprojektion auf den holographische Bildschirm projiziert wird.

14. Verfahren zur holographischen Darstellung von Bildern nach einem der vorhergehenden Ansprüche, **dadurch gekennzeichnet, dass** der Lichtstrahl in Durchlichtprojektion auf den holographische Bildschirm projiziert wird.

15. Vorrichtung zur holographischen Darstellung von Bildern, mit einem eine holographische Aufnahme einer Projektionsfläche umfassenden holographischen Bildschirm (3),
einem Projektionssystem (2) zur Projektion eines entsprechend der zu erzeugenden Bildinformation modulierten Lichtstrahls auf den holographischen Bildschirm (3) bei einer oder mehreren vorbestimmten Wellenlängen und mit einem vorbestimmten Projektionswinkel derart, daß der holographische Bildschirm (3) einen Teil des entsprechend der Bildinformation modulierten Lichtstrahls strent, um ein virtuelles Bild (4) der Bildinformationen holographisch darzustellen, das bei einem vorbestimmten Betrachtungswinkel sichtbar ist, wobei bei der Abtastung des holographischen Bildschirms (3) mit Lichtstrahlen aus der richtigen Belenchtungsrichtung sich das ursprungliche Bild einer holographischen Aufnahme einer Projektionsfläche aufbaut und die zu erzeugenden Bilddaten auf der urspringlichen Projektionsfläche erscheiner.

16. Vorrichtung zur holographischen Darstellung von Bildern nach Anspruch 15, **dadurch gekennzeichnet, dass** der holographische Bildschirm eine holographische Aufnahme einer weißen Projektionsfläche umfasst.

17. Vorrichtung zur holographischen Darstellung von Bildern nach Anspruch 15 oder Anspruch 16, **dadurch gekennzeichnet, dass** das virtuelle Bild in einer Ebene entsteht, die nicht mit der Ebene des holographischen Bildschirms übereinstimmt.

18. Vorrichtung zur holographischen Darstellung von Bildern nach einem der Ansprüche 15-17, **dadurch gekennzeichnet, dass** der holographische Bildschirm bei Umgebungslicht durchsichtig erscheint.

19. Vorrichtung zur holographischen Darstellung von Bildern nach einem der Ansprüche 15-18, **dadurch gekennzeichnet, dass**
der vorbestimmte Betrachtungswinkel mit dem vorbestimmten Projektionswinkel gekoppelt ist, und
die Kopplung des vorbestimmten Betrachtungswinkels mit dem vorbestimmten Projektionswinkel bei der Herstellung der holographischen Aufnahme festgelegt wird.

20. Vorrichtung zur holographischen Darstellung von Bildern nach Anspruch 19, **dadurch gekennzeichnet, dass** die holographische Aufnahme mehrere paarweise gekoppelten Projektions- und Betrachtungswinkeln umfaßt.

21. Vorrichtung zur holographischen Darstellung von Bildern nach einem der Ansprüche 15-20, mit einem oder mehreren weiteren Projektionssystemen zur Projektion eines oder mehreren weiteren Bildinformationen umfassenden Lichtstrahlen auf den holographischen Bildschirm bei einem oder mehreren entsprechenden vorbestimmten Wellenlängen und mit entsprechenden vorbestimmten Projektionswinkeln derart, daß der holographische Bildschirm entsprechende Teile der die Bildinformationen umfassenden Lichtstrahlen streut, um jeweilige virtuelle Bilder der Bildinformationen holographisch darzustellen, die bei jeweiligen vorbestimmten, jeweilig an einem der vorbestimmten Projektionswinkel gekoppelten Betrachtungswinkel sichtbar sind.

22. Vorrichtung zur holographischen Darstellung von Bildern nach einem der Ansprüche 15 bis 21, **dadurch gekennzeichnet, dass** der holographische Bildschirm aus einem flexiblen holographischen Material besteht.

23. Vorrichtung zur holographischen Darstellung von Bildern nach einem der Ansprüchen 15 bis 21, **dadurch gekennzeichnet, dass** der holographische Bildschirm direkt an eine lichtschluckende. Oberfläche angebracht ist.

24. Vorrichtung zur holographischen Darstellung von Bildern nach Anspruch 23, **dadurch gekennzeichnet, dass** die lichtschluckende Oberfläche das Armaturenbrett, eine Airbagabdeckung, eine Handschuhfachabdeckung, eine Fläche des Mitteldomes, eine Innenseite einer Sonnenblende, oder die hintere Fläche der Kopfstütze eines Vordersitzes eines Fahrzeuges ist.

25. Vorrichtung zur holographischen Darstellung von Bildern nach Anspruch 23, **dadurch gekennzeichnet, dass** die lichtschluckende Oberfläche auf der hinteren Fläche der Kopfstütze eines Vordersitzes eines Fahrzeugs angeordnet ist, und eine Projektionsrichtung eines die Projektion des Lichtstrahls ausführenden Projektionssystems bei einer Verstellung des Vordersitzes und/oder der Kopfstütze derart geändert wird, dass der Lichtstrahl mit dem vorbestimmten Projektionswinkel auf den holographischen Bildschirm auftrifft.

26. Vorrichtung zur holographischen Darstellung von Bildern nach einem der Ansprüche 15 bis 25, **dadurch gekennzeichnet, dass** der holographische Bildschirm nicht eben ist.

27. Vorrichtung zur holographischen Darstellung von Bildern nach einem der Ansprüche 15 bis 26, **dadurch gekennzeichnet, dass** der Bildschirm in Auflichtprojektion auf den holographischen Bildschirm projiziert wird.

28. Vorrichtung zur holographischen Darstellung von Bildern nach einem der Ansprüche 19 bis 27, **dadurch gekennzeichnet, dass** der Lichtstrahl in Durchlichtprojektion auf den holographischen Bildschirm projiziert wird.

## Claims

1. Method for the holographic display of images, comprising the steps:
projection of a light beam modulated according to the image information to be generated onto a holographic screen (3) at one or more predetermined wavelengths and at a predetermined projection angle; and
scattering of a part of the light beam modulated according to image information to be generated by means of the holographic screen (3) to holographically display a virtual image (4) of the image information which is visible at a predetermined observation angle, wherein during the scanning of the holographic screen (3) with light beams from the correct lighting direction, the original image of a holographic recording of a projection surface is constructed and the image data to be generated appear on the original projection surface.

2. Method for the holographic display of images according to claim 1, **characterised in that** the holographic screen is a holographic recording of a white projection surface.

3. Method for the holographic display of images according to claim 1 or 2, **characterised in that** the virtual image develops in one plane which does not coincide with the plane of the holographic screen.

4. Method for the holographic display of images according to any one of the preceding claims, **characterised in that** the holographic screen appears transparent in ambient light.

5. Method for the holographic display of images according to any one of the preceding claims, **characterised in that** the predetermined observation angle is coupled to the predetermined projection angle, and the coupling of the predetermined observation angle with the predetermined projection angle is established during production of the holographic recording.

6. Method for the holographic display of images according to claim 5, **characterised in that** the holographic recording comprises a plurality of projection and observation angles which are coupled in pairs.

7. Method for the holographic display of images according to claim 5, comprising the further steps:
projection of one or more further light beams comprising respective image information, at one or more respective predetermined wavelengths onto the holographic screen at respective predetermined projection angles; and
scattering of the parts of the light beams comprising the respective image information by means of the holographic screen, to display holographically respective virtual images of the respective image information which are visible at respective predetermined observation angles respectively coupled to one of the predetermined projection angles.

8. Method for the holographic display of images according to any one of the preceding claims, **characterised in that** the holographic screen comprises flexible holographic material.

9. Method for the holographic display of images according to any one of claims 1 to 8, **characterised in that** the holographic screen is provided directly on a light-absorbing surface.

10. Method for the holographic display of images according to claim 9, **characterised in that** the light-absorbing surface is the dashboard, an airbag covering, a glove compartment covering, an area of the central dome, an interior of a sun visor or the rear face of the headrest of a front seat of a vehicle.

11. Method for the holographic display of images according to claim 9, **characterised in that** the light-absorbing surface is arranged on the rear face of the headrest of a front seat of a vehicle, and a projection direction of a projection system carrying out the projection of the light beam is changed in the event of an adjustment of the front seat and/or the headrest in such a way that the light beam strikes the holographic screen at the predetermined projection angle.

12. Method for the holographic display of images according to any one of the preceding claims, **characterised in that** the holographic screen is not level.

13. Method for the holographic display of images according to any one of the preceding claims, **characterised in that** the light beam is projected onto the holographic screen in front projection.

14. Method for the holographic display of images according to any one of the preceding claims, **characterised in that** the light beam is projected onto the holographic screen in rear projection.

15. Method for the holographic display of images, comprising a holographic screen (3) comprising a holographic recording of a projection surface; a projection system (2) for the projection of a light beam modulated according to image information to be generated onto the holographic screen (3) at one or more predetermined wavelengths and at a predetermined projection angle, in such a way that the holographic screen (3) scatters a part of the light beam modulated according to the image information to holographically display a virtual image (4) of the image information which is visible at a predetermined observation angle, wherein during scanning of the holographic screen (3) with light beams from the correct lighting direction the original image of a holographic recording of a projection surface is constructed and the image data to be generated appear on the original projection surface.

16. Device for the holographic display of images according to claim 15, **characterised in that** the holographic screen comprises a holographic recording of a white projection surface.

17. Device for the holographic display of images according to claim 15 or claim 16, **characterised in that** the virtual image is formed in one plane which does not coincide with the plane of the holographic screen.

18. Device for the holographic display of images according to any one of claims 15 to 17, **characterised in that** the holographic screen appears transparent in ambient light.

19. Device for the holographic display of images according to any one of claims 15 to 18, **characterised in that** the predetermined observation angle is coupled to the predetermined projection angle and the coupling of the predetermined observation angle with the predetermined projection angle is established during production of the holographic recording.

20. Device for the holographic display of images according to claim 19, **characterised in that** the holographic recording comprises a plurality of projection and observation angles coupled in pairs.

21. Device for the holographic display of images according to any one of claims 15 to 20 comprising one or more further projection systems for the projection of one or more light beams comprising further image information onto the holographic screen at one or more corresponding predetermined wavelengths and at corresponding predetermined projection angles in such a way that the holographic screen scatters corresponding parts of the light beams comprising the image information to holographically display respective virtual images of the image information which are visible at respective predetermined observation angles coupled to a predetermined projection angle.

22. Device for the holographic display of images according to any one of claims 15 to 21, **characterised in that** the holographic screen consists of a flexible holographic material.

23. Device for the holographic display of images according to any one of claims 15 to 21, **characterised in that** the holographic screen is directly provided on a light-absorbing surface.

24. Device for the holographic display of images according to claim 23, **characterised in that** the light-absorbing surface is the dashboard, an air bag covering, a glove compartment covering, an area of the central dome, an interior of a sun visor, or the rear face of the headrest of a front seat of a vehicle.

25. Device for the holographic display of images according to claim 23, **characterised in that** the light-absorbing surface is arranged on the rear face of the headrest of a front seat of a vehicle, and a projection direction of a projection system carrying out the projection of the light beam is changed in the event of an adjustment of the front seat and/or the headrest in such a way that the light beam strikes the holographic screen at the predetermined projection angle.

26. Device for the holographic display of images according to any one of claims 15 to 25, **characterised in that** the holographic screen is not level.

27. Device for the holographic display of images according to any one of claims 15 to 26, **characterised in that** the screen is projected onto the holographic screen in front projection.

28. Device for the holographic display of images according to any one of claims 15 to 27, **characterised in that** the light beam is projected onto the holographic screen in rear projection.

## Revendications

1. Procédé destiné à l'affichage holographique d'images, comprenant les étapes de :
projection d'un rayon lumineux modulé correspondant à l'information d'image à générer sur un écran holographique (3) pour une ou plusieurs longueur(s) d'onde prédéterminée(s) et selon un angle de faisceau prédéterminé ; et
diffusion d'une partie du rayon lumineux modulé correspondant à l'information d'image à générer au moyen de l' écran holographique (3) afin d'afficher de manière holographique une image virtuelle (4) des informations d'image, qui est visible selon un angle de vue prédéterminé, moyennant quoi
lors du balayage de l'écran holographique (3) avec les rayons lumineux à partir de la direction d'éclairage exacte se constitue l'image initiale d'un enregistrement holographique d'une surface de projection et les données d'image à générer apparaissent sur la surface de projection initiale.

2. Procédé destiné à l'affichage holographique d'images selon la revendication 1, **caractérisé en ce que**
l'écran holographique est un enregistrement holographique d'une surface de projection blanche.

3. Procédé destiné à l'affichage holographique d'images selon la revendication 1 ou 2, **caractérisé en ce que** l'image virtuelle apparaît dans un plan qui ne coïncide pas avec le plan de l'écran holographique.

4. Procédé destiné à l'affichage holographique d'images selon l'une quelconque des revendications précédentes, **caractérisé en ce que** l'écran holographique apparaît de manière transparente à la lumière ambiante.

5. Procédé destiné à l'affichage holographique d'images selon l'une quelconque des revendications précédentes, **caractérisé en ce que** l'angle de vue prédéterminé est couplé avec l'angle du faisceau prédéterminé, et le couplage de l'angle de vue prédéterminé avec l'angle du faisceau prédéterminé est fixé lors de la réalisation de l'enregistrement holographique.

6. Procédé destiné à l'affichage holographique d'images selon la revendication 5, **caractérisé en ce que** l'enregistrement holographique comprend plusieurs angles de faisceau et de vue couplés par paire.

7. Procédé destiné à l'affichage holographique d'images selon la revendication 5, comprenant les étapes suivantes de :
projection d'un ou plusieurs autre(s) rayon(s) lumineux, comprenant des informations d'image respectives, pour une ou plusieurs longueur(s) d'onde respectives sur l'écran holographique selon des angles de faisceau prédéterminés respectifs ; et
diffusion des parties des rayons lumineux comprenant les informations d'image respectives au moyen de l'écran holographique, afin d'afficher de manière holographique des images virtuelles respectives des informations d'images respectives, qui sont visibles pour des angles de vue prédéterminés respectifs, couplés respectivement avec l'un des angles de faisceau prédéterminés.

8. Procédé destiné à l'affichage holographique d'images selon l'une quelconque des revendications précédentes, **caractérisé en ce que** l'écran holographique comprend un matériau holographique souple.

9. Procédé destiné à l'affichage holographique d'images selon l'une des revendications 1 à 8, **caractérisé en ce que** l'écran holographique est appliqué directement sur une surface absorbant la lumière.

10. Procédé destiné à l'affichage holographique d'images selon la revendication 9, **caractérisé en ce que** la surface absorbant la lumière est le tableau de bord, un couvercle d'airbag, un couvercle de boîte à gants, une face du dôme central, une face interne d'un pare-soleil ou la face arrière de l'appuie-tête d'un siège avant d'un véhicule automobile.

11. Procédé destiné à l'affichage holographique d'images selon la revendication 9, **caractérisé en ce que** la surface absorbant la lumière est disposée sur la face arrière de l'appuie-tête d'un siège avant d'un véhicule automobile, et un sens de projection d'un système de projection effectuant la projection du rayon lumineux est modifié lors d'un réglage du siège avant et/ou de l'appuie-tête de sorte que le rayon lumineux apparaît selon l'angle de faisceau prédéterminé sur l'écran holographique.

12. Procédé destiné à l'affichage holographique d'images selon l'une quelconque des revendications précédentes, **caractérisé en ce que** l'écran holographique n'est pas plan.

13. Procédé destiné à l'affichage holographique d'images selon l'une quelconque des revendications précédentes, **caractérisé en ce que** le rayon lumineux est projeté en projection par réflexion sur l'écran holographique.

14. Procédé destiné à l'affichage holographique d'images selon l'une quelconque des revendications précédentes, **caractérisé en ce que** le rayon lumineux est projeté en projection par transparence sur l'écran holographique.

15. Dispositif destiné à l'affichage holographique d'images avec un écran holographique (3) comprenant un enregistrement holographique d'une surface de projection ; un système de projection pour la projection (2) d'un rayon lumineux modulé correspondant à l'information d'image à générer sur l'écran holographique (3) pour une ou plusieurs longueur(s) d'onde prédéterminée(s) et selon un angle de faisceau prédéterminé de sorte que l'écran holographique (3) diffuse une partie du rayon lumineux modulé correspondant à l'information d'image, afin d'afficher de manière holographique une image virtuelle (4) des informations d'image, laquelle est visible selon un angle de vue prédéterminé, moyennant quoi lors du balayage de l'écran holographique (3) avec les rayons lumineux à partir de la direction d'éclairage exacte se constitue l'image initiale d'un enregistrement holographique d'une surface de projection et les données d'image à générer apparaissent sur la surface de projection initiale.

16. Dispositif destiné à l'affichage holographique d'images selon la revendication 15, **caractérisé en ce que** l'écran holographique comprend un enregistrement holographique d'une surface de projection blanche.

17. Dispositif destiné à l'affichage holographique d'images selon la revendication 15 ou la revendication 16, **caractérisé en ce que** l'image virtuelle apparaît dans un plan qui ne coïncide pas avec le plan de l'écran holographique.

18. Dispositif destiné à l'affichage holographique d'images selon l'une des revendications 15 à 17, **caractérisé en ce que** l'écran holographique apparaît de manière transparente à la lumière ambiante.

19. Dispositif destiné à l'affichage holographique d'images selon l'une des revendications 15 à 18, **caractérisé en ce que**
l'angle de vue prédéterminé est couplé avec l'angle du faisceau prédéterminé, et
le couplage de l'angle de vue prédéterminé avec l'angle du faisceau prédéterminé est fixé lors de la réalisation de l'enregistrement holographique.

20. Dispositif destiné à l'affichage holographique d'images selon la revendication 19, **caractérisé en ce que** l'enregistrement holographique comprend plusieurs angles de faisceau et de vue couplés par paire.

21. Dispositif destiné à l'affichage holographique d'images selon l'une des revendications 15 à 20, avec un ou plusieurs autre(s) système(s) de projection pour la projection d'un ou de plusieurs autre(s) rayon (s) lumineux comprenant des informations d'image sur l'écran holographique pour une ou plusieurs longueur(s) d'onde prédéterminée(s) correspondante(s) et selon les angles de faisceau prédéterminés correspondants de aorte que l'écran holographique diffuse des parties correspondantes des rayons lumineux comprenant des informations d'image, afin d'afficher de manière holographique des images virtuelles respectives des informations d'image, qui sont visibles selon un angle de vue prédéterminé respectif couplé respectivement à un angle de faisceau prédéterminé.

22. Dispositif destiné à l'affichage holographique d'images selon l'une des revendications 15 à 21, **caractérisé en ce que** l'écran holographique est composé d'un matériau holographique souple.

23. Dispositif destiné à l'affichage holographique d'images selon l'une des revendications 15 à 21, **caractérisé en ce que** l'écran holographique est appliqué directement sur une surface absorbant la lumière.

24. Dispositif destiné à l'affichage holographique d'images selon la revendication 23, **caractérisé en ce que** la surface absorbant la lumière est le tableau de bord, un couvercle d'airbag, un couvercle de boîte à gants, une du dôme central, une face interne d'un pare-soleil ou la face arrière de l'appuie-tête d'un siège avant d'un véhicule automobile.

25. Dispositif destiné à l'affichage holographique d'images selon la revendication 23, **caractérisé** en ce la surface absorbant la lumière est disposée sur la face arrière de l'appuie-tête d'un siège avant d'un véhicule automobile, et un sens de projection d'un système de projection effectuant la projection du rayon lumineux est modifié lors d'un réglage du siège avant et/ou de l'appuie-tête de sorte que le rayon lumineux apparaisse selon l'angle de faisceau prédéterminé sur l'écran holographique.

26. Dispositif destiné à l'affichage holographique d'images selon l'une des revendications 15 à 25, **caractérisé en ce que** l'écran holographique n'est pas plan.

27. Dispositif destiné à l'affichage holographique d'images selon l'une des revendications 15 à 26, **caractérisé en ce que** le rayon lumineux est projeté en projection par réflexion sur l'écran holographique.

28. Dispositif destiné à l'affichage holographique d'images selon l'une des revendications 15 à 17, **caractérisé en ce que** le rayon lumineux est projeté en projection par transparence sur l'écran holographique.
